# EUROPEAN PATENT APPLICATION

(11) **EP 2 068 462 A1**
(43) Date of publication of application: **10.06.2009**
(21) Application number: 07828290.2
(22) Date of filing: 21.09.2007
(51) Int. Cl.: H04B 7/26, H04Q 7/38

(54) **POSITION MANAGING DEVICE, MOBILE STATION DEVICE, BASE STATION DEVICE, FREQUENCY LAYER CONTROL METHOD, PROGRAM, AND RECORDING MEDIUM**

(30) Priority: 26.09.2006 JP 2006260078
(71) Applicant: Sharp Kabushiki Kaisha, Osaka-shi, Osaka 545-8522 (JP)
(72) Inventor: YAMADA, Shohei, Chiba-shi, Chiba 261-0004 (JP); NAKASHIMA, Daiichiro, Chiba-shi, Chiba 261-0013 (JP)
(74) Representative: Müller - Hoffmann & Partner
(86) International application number: PCT/JP2007/068369
(87) International publication number: WO 2008/044451

(57) **Abstract**

In a mobile communication system, it is possible to improve the frequency use efficiency of the entire communication system and effectively execute base station control of used frequency layer for a particular mobile station. The present invention can be applied to a multimedia broadcast/multicast service (MBMS) mobile communication system having different frequency layer reception capability. A position managing device (aGW) decides an information transmission frequency layer to a frequency position and/or idle mode mobile station device which provides the MBMS in accordance with MBMS desire information as an index of the MBMS transmission frequency layer control. A mobile station device (UE) receives MBMS and an idle mode mobile station device with the frequency layer specified by aGW.

## Description

### TECHNICAL FIELD

The present invention relates to a position managing device, a mobile station device, a base station device, a frequency layer control method, a program, and a recording medium in a mobile communication system, more specifically, to a mobile station device having different frequency layer reception capability and a base station device, and position registration of the mobile station device applied to a position information managing device that manages position information of the mobile station device and a paging technology.

### BACKGROUND OF THE INVENTION

In a 3GPP (3rd Generation Partnership Project), a W-CDMA (Wideband-Code Division Multiplexing) system is standardized as a third generation cellular mobile communication system and services are started sequentially. Moreover, an HSDPA in which a communication speed is further increased is also standardized and services are going to be started.

On the other hand, in the 3GPP, the third generation evolved universal terrestrial radio access (Evolved Universal Terrestrial Radio Access, hereinafter referred to as EUTRA) and the third generation evolved universal terrestrial radio access network (Evolved Universal Terrestrial Radio Access Network, hereinafter referred to as EUTRAN) have been studied. As a communication system of a downlink of the EUTRA, an OFDMA (Orthogonal Frequency Division Multiplexing Access) system has been proposed. As an EUTRA technology, a technology including an adaptive modulation/demodulation and error correction system (AMCS: Adaptive Modulation and Coding Scheme) (hereinafter referred to as AMCS system) based on adaptive radio link control (link adaptation, Link Adaptation) such as channel coding has been applied to the OFDMA system.

Moreover, as an uplink of the EUTRA, various proposals have been made including a multi-carrier communication system and a single-carrier communication system, and the single-carrier communication system in a VSCRF (Variable Spreading and Chip Repetition Factors)-CDMA system, an IFDMA (Interleaved Frequency Division Multiple Access) system or a DFT (Discrete Fourier Transform)-Spread OFDM system has been proposed as a radio communication system effective for the uplink compared to the multi-carrier communication system in the OFDM system or the like.

In addition, services provided by the EUTRAN assume packet-base services, and a developed version of an MBMS (Multimedia Broadcast Multicast Service) which is provided in the W-CDMA is also to be incorporated. The MBMS refers to a service that transfers the same multi-media data to a plurality of receivers through a radio network. At this time, one radio channel is shared by the plurality of receivers so that radio transmission resources can be saved.

Moreover, technical requirements for the EUTRA/EUTRAN (for example, see non-patent document 2) have been proposed, in which a spectrum flexibility for integration and coexistence with existing 2G and 3G services is requested and support for allocation of frequency for spectrum of different size (frequency bandwidth of, for example, 1.25 MHz, 2.5 MHz, 5 MHz, 10 MHz, and 20 MHz) (Support for spectrum allocations of different size) is requested.

Moreover, technical requirements for the EUTRAN (see non-patent document 3) have been proposed, in which support for a mobile station of a mobile station class having transmission/reception capability of different frequency bandwidth (for example, 10 MHz, 15 MHz, and 20 MHz) is also requested. In addition, technical materials for the EUTRA (see non-patent document 4) have been proposed, in which a method for specifying a frequency bandwidth position (a center frequency shift) to be used with respect to a mobile station having transmission/reception capability of different frequency bandwidth is shown. The problem here is a method for storing a mobile station having transmission/reception capability of a 10 MHz bandwidth when a base station frequency bandwidth is 20 MHz bandwidth, and candidates for band positions where communication is performed in an active mode (Connected mode), an idle mode (waiting state), and at the time of MBMS reception are shown.

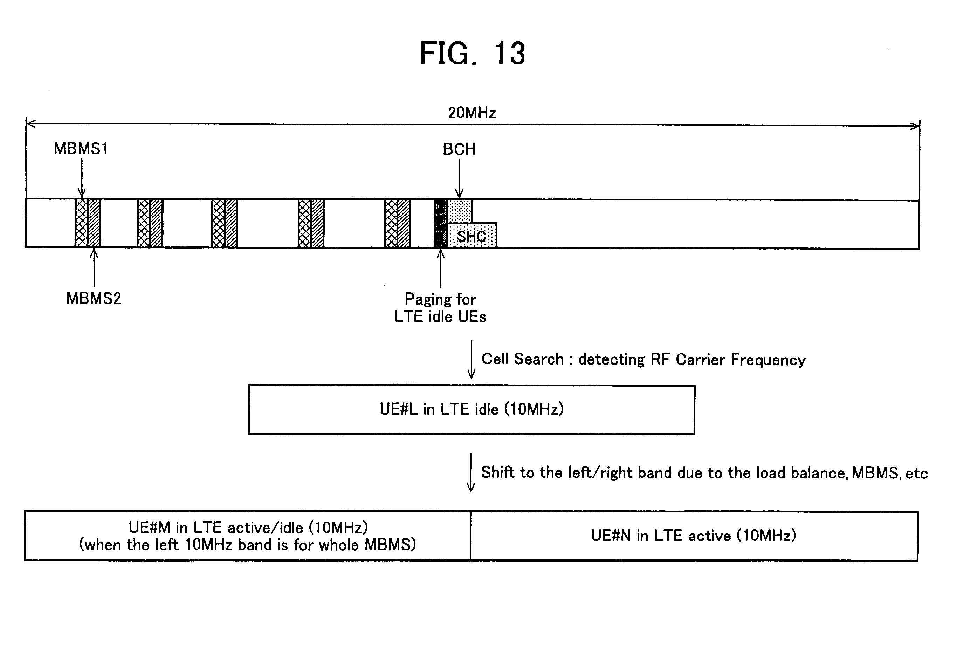

As shown in Fig. 13, candidates for bands include three bands of the center 10 MHz band in 20 MHz, the right 10 MHz band in 20 MHz, and the left 10 MHz band in 20 MHz. In Fig. 13, in the left 10 MHz band, an MBMS service 1, an MBMS service 2, a BCH (broadcast information channel), and a PCH (paging channel) are arranged. In this case, an MBMS receiving mobile station and an idle mode mobile station perform communication in the left 10 MHz and other active mode mobile stations perform communication in the right 10 MHz band.

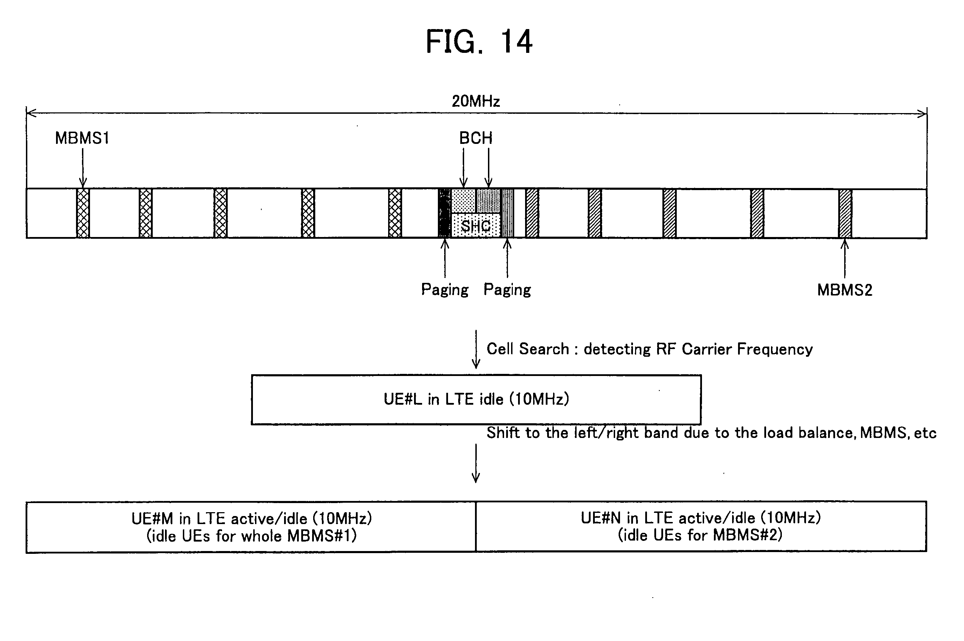

On the other hand, in Fig. 14, the MBMS service 1 is arranged in the left 10 MHz band and the MBMS service 2 is arranged in the right 10 MHz band, and the BCHs and the PCHs are arranged in the right and left redundantly. In this case, the receiving mobile station of the MBMS service 1 performs communication in the left 10 MHz and the receiving mobile station of the MBMS service 2 performs communication in the right 10 MHz (see non-patent document 4).

In patent document 1, in an MBMS mobile communication system having a plurality of frequency layers, by signaling to an active mode mobile station, priority frequency layers of an MBMS service and an exclusive traffic service are controlled and the mobile station determines whether to receive which service.
[Patent document 1] Japanese Laid-Open Patent Publication No. 2006-42354
[Non-patent document 1] 3GPP TR (Technical Report) 25.858, and 3GPP HSDPA specification-related materials.
   http://www.3gpp.org/ftp/Specs/html-info/25-series.htm
[Non-patent document 2] 3GPP TR (Technical Report) 25.913, V2.1.0 (2005-05), Requirements for evolved Universal Terrestrial Radio Access (UTRA) and Universal Terrestrial Radio Access Network (UTRAN).
   http://www.3gpp.org/ftp/Specs/html-info/25913.htm
[Non-patent document 3] 3GPP TR (Technical Report) 25.913, V7.2.0 (2005-12), Requirements for Evolved UTRA (E-UTRA) and Evolved UTRAN (E-UTRAN)
[Non-patent document 4] R2-061001 "Principles of scalable bandwidth scenarios", 3GPP TSG RAN WG2 Metting#52 Athens, Greece, March 27-31, 2006

### DISCLOSURE OF THE INVENTION

### PROBLEMS TO BE SOLVED BY THE INVENTION

However, in the above-described patent documents, traffics in the idle mode (for example, paging information, broadcast information, a short message and the like) are not considered. As shown in Fig. 14, when a mobile station in the idle mode changes a frequency layer for MBMS reception, the mobile station has a decision right to change the frequency layer based on priority information from a network. That is, since it is impossible for a higher-order node (a position managing device and a radio resource control device such as an RNC and an SGSN) to know to which frequency layer the mobile station has moved, it is necessary to send paging and broadcast information to both frequency layers.

Further, in the case of an MBMS transmission service in one frequency layer as shown in Fig. 13, when the number of mobile stations that want to receive both the exclusive traffic service and the MBMS transmission service is increased, traffic volume in one frequency layer increases, thus it is necessary to press the mobile station to disconnect from either the exclusive traffic service or the MBMS service.

These problems are caused by that management for the MBMS reception frequency layer of the mobile station and reception taste, load on the exclusive traffic, a camped frequency layer of the mobile station in the idle mode are not performed integrally in the higher-order node.

The present invention has been made in order to solve the above-mentioned problems, and aims to provide a position managing device, a mobile station device, a base station device, a frequency layer control method, a program and a recording medium, that improve the frequency use efficiency of the entire communication system and enable to execute base station control of a used frequency layer with respect to a specific mobile station efficiently in a mobile communication system where mobile stations of a mobile station class having transmission/reception capability of different frequency layers are mixed.

### MEANS FOR SOLVING THE PROBLEMS

To solve the above problem, a first technical means of the present invention is a position managing device applied to a multimedia broadcast/multicast service (MBMS) mobile communication system that stores a mobile station device having different frequency layer reception capability, determining a frequency layer that provides an MBMS.

A second technical means is the position managing device as defined in the first technical means, wherein the frequency layer that provides the MBMS is determined depending on at least MBMS request information serving as an index of control for an MBMS transmission frequency layer, acquired from the mobile station device.

A third technical means is the position managing device as defined in the second technical means, wherein based on the MBMS request information, when the number of MBMS reception mobile station devices exceeds a certain threshold, the number of the MBMS transmission frequency layer is increased, and when being lower than the threshold, the number of the MBMS transmission frequency layer is reduced.

A fourth technical means is a position managing device applied to a multimedia broadcast/multicast service (MBMS) mobile communication system that stores a mobile station device having different frequency layer reception capability, determining a frequency layer that transmits information to an idle mode mobile station device.

A fifth technical means is the position managing device as defined in the fourth technical means, wherein the frequency layer that transmits information to the idle mode mobile station device is determined depending on at least a frequency layer that provides the MBMS.

A sixth technical means is the position managing device as defined in the fifth technical means, wherein the frequency layer that transmits information to the idle mode mobile station device is determined depending on at least a paging group and MBMS request information serving as an index of control for an MBMS transmission frequency layer, acquired from the mobile station device.

A seventh technical means is the position managing device as defined in the fifth technical means, wherein the frequency layer that transmits information to the idle mode mobile station device that has frequency layer reception capability capable of receiving more frequency layers than one MBMS transmission frequency layer simultaneously is determined at least in association with the paging group.

An eighth technical means is the position managing device as defined in the fifth technical means, wherein the frequency layer that transmits information to the idle mode mobile station device that has frequency layer reception capability capable of receiving more frequency layers than one MBMS transmission frequency layer simultaneously is determined as a different frequency layer from the MBMS transmission frequency layer.

A ninth technical means is the position managing device as defined in the fifth technical means, wherein the frequency layer that transmits information to the idle mode mobile station device that has frequency layer reception capability capable of receiving more frequency layers than one MBMS transmission frequency layer simultaneously is determined depending on a ratio of a mobile station device group desiring the MBMS and a mobile station device group not desiring the MBMS in a mobile station group having different frequency layer reception capability.

A tenth technical means is the position managing device as defined in the sixth or the seventh technical means, wherein the paging group is determined based on identification information of the mobile station device.

An eleventh technical means is the position managing device as defined in the sixth or the seventh technical means, wherein the paging group is determined by the position managing device.

A twelfth technical means is the position managing device as defined in the second, the sixth or the seventh technical means, wherein a position registration request that is transmitted by the mobile station device in position registration or a bearer set up request that is transmitted by the mobile station device for communication connection establishment is caused to include MBMS request information serving as an index of control for an MBMS transmission frequency layer.

A thirteenth technical means is the position managing device as defined in the first technical means, wherein a base station device is instructed to transmit broadcast information or paging information with change information of the frequency layer that provides the MBMS included.

A fourteenth technical means is the mobile station device applied to a multimedia broadcast/multicast service (MBMS) mobile communication system that stores a mobile station device having different frequency layer reception capability, receiving an MBMS by a frequency layer that provides the MBMS determined by a position managing device.

A fifteenth technical means is the mobile station device as defined in the fourteenth technical means, wherein MBMS request information serving an index of control for an MBMS transmission frequency layer is transmitted to a position managing device.

A sixteenth technical means is the mobile station device applied to a multimedia broadcast/multicast service (MBMS) mobile communication system that stores a mobile station device having different frequency layer reception capability, receiving information to an idle mode mobile station device by a frequency layer depending on a paging group or a frequency layer determined by a position managing device.

A seventeenth technical means is the mobile station device as defined in the sixteenth technical means, wherein the information to the idle mode mobile station device is received by a frequency layer determined depending on at least a frequency layer that provides the MBMS.

An eighteenth technical means is the mobile station device as defined in the seventeenth technical means, wherein the information to the idle mode mobile station device is received by a frequency layer determined depending on at least a paging group and MBMS request information serving as an index of control for an MBMS transmission frequency layer, acquired from the mobile station device.

A nineteenth technical means is the mobile station device as defined in the seventeenth technical means, wherein a mobile station device that has frequency layer reception capability capable of receiving more frequency layers than one MBMS transmission frequency layer simultaneously receives the information to the idle mode mobile station device by a frequency layer determined depending on at least the paging group.

A twentieth technical means is the mobile station device as defined in the seventeenth technical means, wherein the mobile station device that has frequency layer reception capability capable of receiving more frequency layers than one MBMS transmission frequency layer simultaneously receives the information to the idle mode mobile station device by a different frequency layer from the MBMS transmission frequency layer.

A twenty-first technical means is the mobile station device as defined in the seventeenth technical means, wherein the paging group is determined based on identification information of the mobile station device.

A twenty-second technical means is the mobile station device as defined in the seventeenth technical means, wherein the paging group is determined by the position managing device.

A twenty-third technical means is the mobile station device as defined in the fifteenth or the eighteenth technical means, wherein a position registration request that is transmitted in position registration or a bearer set up request that is transmitted for communication connection establishment is transmitted with the MBMS request information included.

A twenty-fourth technical means is the mobile station device as defined in the seventeenth technical means, wherein a frequency layer in the idle mode is changed depending on broadcast information or paging information transmitted from the base station.

A twenty-fifth technical means is the mobile station device as defined in the seventeenth technical means, wherein the frequency layer in the idle mode is changed depending on a position registration response in position registration or a bearer release response.

A twenty-sixth technical means is a base station device applied to a multimedia broadcast/multicast service (MBMS) mobile communication system that stores a mobile station device having different frequency layer reception capability, transmitting the MBMS by a frequency layer that provides an MBMS determined by a position managing device.

A twenty-seventh technical means is the base station device as defined in the twenty-sixth technical means, wherein the frequency layer that provides the MBMS is determined depending on at least MBMS request information serving as an index of control for an MBMS transmission frequency layer transmitted by the mobile station device.

A twenty-eighth technical means is a base station device applied to a multimedia broadcast/multicast service (MBMS) mobile communication system that stores a mobile station device having different frequency layer reception capability, transmitting information to an idle mode mobile station device by a frequency layer depending on a paging group or frequency layer determined by a position managing device.

A twenty-ninth technical means is the base station device as defined in the twenty-eighth technical means, wherein the information to the idle mode mobile station device is transmitted by a frequency layer determined depending on at least the frequency layer that provides the MBMS.

A thirtieth technical means is the base station device as defined in the twenty-ninth technical means, wherein the information to the idle mode mobile station device is transmitted by a frequency layer determined depending on at least a paging group and MBMS request information serving as an index of control for an MBMS transmission frequency layer transmitted by the mobile station device.

A thirty-first technical means is the base station device as defined in the twenty-ninth technical means, wherein information to an idle mode mobile station device that has frequency layer reception capability capable of receiving more frequency layers than one MBMS transmission frequency layer simultaneously is transmitted by a frequency layer determined depending on at least the paging group.

A thirty-second technical means is the base station device as defined in the twenty-ninth technical means, wherein information to the idle mode mobile station device that has frequency layer reception capability capable of receiving more frequency layers than one MBMS transmission frequency layer simultaneously is transmitted by a different frequency layer from the MBMS transmission frequency layer.

A thirty-third technical means is the base station device as defined in the twenty-ninth technical means, wherein the paging group is determined based on identification information of the mobile station device.

A thirty-fourth technical means is the base station device as defined in the twenty-ninth technical means, wherein the paging group is determined by the position managing device.

A thirty-fifth technical means is a base station device applied to a multimedia broadcast/multicast service (MBMS) mobile communication system that stores a mobile station device having different frequency layer reception capability, transmitting information to an idle mode mobile station device that has frequency layer reception capability capable of receiving more frequency layers than one MBMS transmission frequency layer simultaneously by a frequency layer determined by the base station device.

A thirty-sixth technical means is the base station device as defined in the thirty-fifth technical means, wherein the frequency layer is determined depending on traffic volume of another mobile station device that is currently in communication.

A thirty-seventh technical means is a frequency layer control method applied to a multimedia broadcast/multicast service (MBMS) mobile communication system that stores a mobile station device having different frequency layer reception capability, wherein
a position managing device determines a frequency layer that provides an MBMS,
a base station device transmits the MBMS by the frequency layer instructed from the position managing device, and
a mobile station device receives the MBMS by the frequency layer instructed from the position managing device.

A thirty-eighth technical means is a frequency layer control method applied to a multimedia broadcast/multicast service (MBMS) mobile communication system that stores a mobile station device having different frequency layer reception capability, wherein
a position managing device determines a frequency layer that transmits information to an idle mode mobile station device,
a base station device transmits information to the idle mode mobile station device by the frequency layer determined by the position managing device, and
a mobile station device receives information to the idle mode mobile station device by the frequency layer determined by the position managing device.

An thirty-ninth technical means is a program for causing a computer to realize a function of the position managing device as defined in any one of the first to the thirteenth technical means, the mobile station device as defined in any one of the fourteenth to the twenty-fifth technical means, or the base station device as defined in any one of the twenty-sixth to the thirty-sixth technical means.

A fortieth technical means is a recording medium having the program as defined in the thirty-ninth technical means recorded in a computer so as to be readable.

### EFFECTS OF THE INVENTION

According to the present invention, it is possible to provide a position managing device, a mobile station device, a base station device, a frequency layer control method, a program and a recording medium, that improve the frequency use efficiency of the entire communication system and enable to execute base station control of a used frequency layer with respect to a specific mobile station efficiently in a mobile communication system where mobile stations of a mobile station class having transmission/reception capability of different frequency layers are mixed.

### BRIEF DESCRIPTION OF DRAWINGS

Fig. 1 is a view showing the simplified structure of a system of an EUTRAN;
Fig. 2 is a view showing a mapping example of a downlink in which a part of an IMSI or a TMSI is used for specification of a Right Band and a Left Band;
Fig. 3 is a view showing an MBMS control method when control of an MBMS service is applied to a method for managing a camped frequency layer of Fig. 1;
Fig. 4 is a view showing another example of an MBMS control method when control of an MBMS service is applied to a method for managing a camped frequency layer of Fig. 1;
Fig. 5 is a view conceptually showing arrangement of respective physical channels transmitted from a base station of the 20 MHz bandwidth;
Fig. 6 is another view conceptually showing arrangement of respective physical channels transmitted from a base station of the 20 MHz bandwidth;
Fig. 7 is a still another view conceptually showing arrangement of respective physical channels transmitted from a base station of the 20 MHz bandwidth;
Fig. 8 is a view showing an example of an MBMS control method of a base station, an aGW, and an idle mode mobile station;
Fig. 9 is a view showing a mapping state of a downlink in accordance with the flow of Fig. 8;
Fig. 10 is a view showing an example where a bearer set up and control for a transmission frequency layer of the MBMS are performed simultaneously;
Fig. 11 is a view illustrating a method for reducing a signal load between the aGW and the mobile station;
Fig. 12 is a view showing a method for specifying a camped layer in accordance with relationship between a transmission method of the MBMS, paging groups, a reception capability frequency layer and MBMS Groups;
Fig. 13 is a view showing an example of a method for storing the mobile station having transmission/reception capability of the 10 MHz bandwidth when a base station frequency layer bandwidth is 20 MHz; and
Fig. 14 is a view showing another example of a method for storing the mobile station having transmission/reception capability of the 10 MHz bandwidth when a base station frequency layer bandwidth is 20 MHz.

### PREFERRED EMBODIMENTS OF THE INVENTION

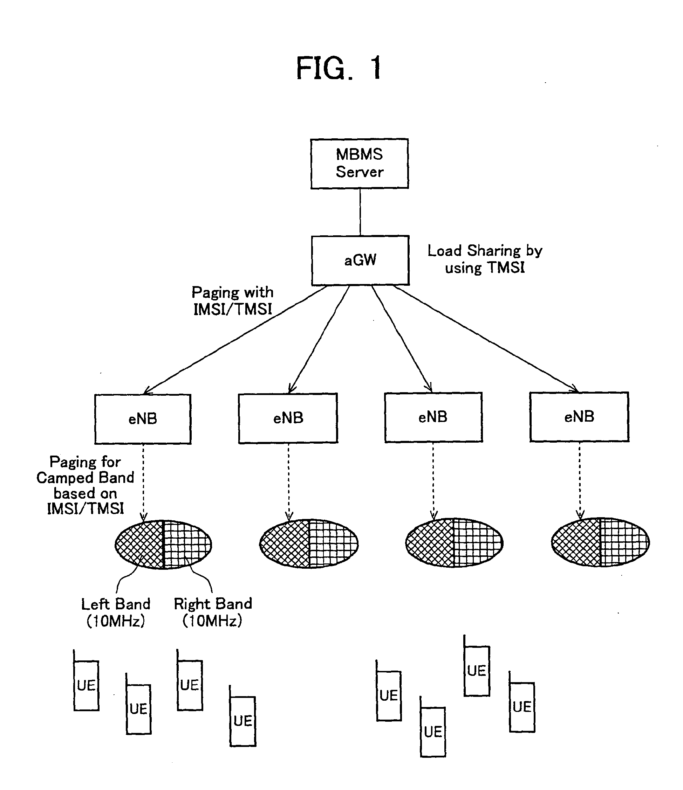

Fig. 1 is a view showing the simplified structure of a system of an EUTRAN. An aGW (access Gateway) corresponds to a higher-order node (an SGSN, an RNC in a W-CDMA/GPRS system), and performs activation of paging and exchanging of signaling with a mobile station (UE: User Equipment) independently from an access system (NAS signaling: Non Access Stratum signaling). The aGW can be separated into a user plane node and a control plane node, but is handled here as the same node.

The aGW corresponds to a position managing device of the present invention, performs position management (corresponding to a VLR in a W-CDMA system), receives position registration/update request from the mobile station, and registers in a position management data base. When there is incoming to the mobile station, the aGW acquires registration information of the mobile station from the position management data base and transmits a paging request to a base station (eNB: evolved NodeB) in a position registration area. The position request/update request from the mobile station, similarly to the W-CDMA system, includes an IMSI (International Mobile Subscriber Identity) in the initial registration and a TMSI (Temporary Mobile Subscriber Identity) in the position update, and is registered in the position management data base of the aGW.

The paging is performed such that the position registration area of the mobile station where packets arrive is acquired from the position management data base and the paging request is transmitted from the position managing device to the base station in the position registration area. Here, the paging request means that the base station in the position registration area receives NAS signaling of the paging from the aGW and the base station transmits a paging indicator (PICH) and/or paging information (PCH) to the mobile station or a group of the mobile station as physical signaling.

The mobile station in the idle mode performs reception of the paging from the position managing device, reception of broadcast information (also including radio format setting, a short message, and the like) from the base station, reception of an MBMS shared control signal, and the like. The MBMS shared control signal transmits kinds of the MBMS service, scheduling information of the MBMS, and the like. The mobile station in the idle mode is also capable of receiving MBMS data.

An MBMS Server is held responsible for the scheduling of MBMS data as a source of the MBMS data. An MBMS data stream generated by the MBMS Server is transmitted to the mobile station via the aGW and the base station.

The aGW controls MBMS related services of respective subscribers. The aGW transmits the MBMS related services selectively to specific base stations and performs support of frequency/time scheduling of the MBMS related services between the base stations, and the like. The aGW and the MBMS Server may be defined as a common node. The MBMS service can be also provided by an SFN (Single Frequency Network), and in such a case, the respective base stations are operated as a synchronous system and are capable of transmitting the same data at the same time and to the same frequency area.

When the maximum frequency bandwidth of the base station is 20 MHz, frequency layers in which bands of the respective base stations are divided by 10 MHz are defined as a Left Band (left band: referred to also as a Lower Band in the low-frequency side) and a Right Band (right band: referred to also as an Upper Band in the high-frequency side) for storing the mobile station having the 10 MHz transmission/reception capability. At this time, a camped frequency layer (Camped Frequency Layer) of the mobile station has two candidates of the Left Band and the Right Band. Thus, the aGW manages as to in which frequency layer the mobile station camps. This makes it possible to specify to which frequency layer NAS signaling to the respective mobile stations is to be transmitted and to avoid overhead that double transmission is made to each band. The used frequency layer of the mobile station in the active mode is managed by the aGW and the base station.

In order to manage the camped frequency layer by the aGW, the mobile station also performs registration of the camped frequency layer simultaneously at the time of position registration/update. In the initial registration, generally, the mobile station transmits an IMSI to the aGW and the aGW allocates a TMSI, but at that time, the camped frequency layer is instructed by the aGW. Similarly also in the position update, the aGW instructs change of the camped frequency layer.

Description will be given for a paging method at the start of transmission of NAS signaling to the idle mode mobile station. In the paging, the aGW transmits a paging request with the camped frequency layer of the mobile station added thereto, and the base station acquires information of the camped frequency layer of the mobile station in the paging request and transmits a paging indicator (PICH) and/or paging information (PCH) to a reception band of the camped frequency layer of the mobile station. The mobile station transmits the position registration/update request also including a reception capability frequency layer therein, and the aGW instructs the camped frequency layer of the mobile station depending on the response.

Since the mobile station that has the 20 MHz transmission/reception capability the same as 20 MHz which is the maximum frequency bandwidth of the base station is capable of receiving information of both frequency layers, it is also possible to configure such that the base station transmits the paging indicator (PICH) and/or paging information (PCH) in one band without instructing the camped frequency layer, and the mobile station receives and demodulates both frequency layers, and detects the paging indicator (PICH) and/or paging information (PCH). The mobile station that has the 10 MHz transmission/reception capability transmits the position registration/update request also including a reception capability frequency layer therein, and the aGW instructs the camped frequency layer of the mobile station depending on the response.

By configuring in this way, the aGW is capable of managing the camped frequency layer of the mobile station. However, since the paging request always includes the IMSI or the TMSI which is subscriber identification information of the mobile station, a part of the IMSI or the TMSI is also considered to be used for specification of the Right Band and the Left Band implicitly.

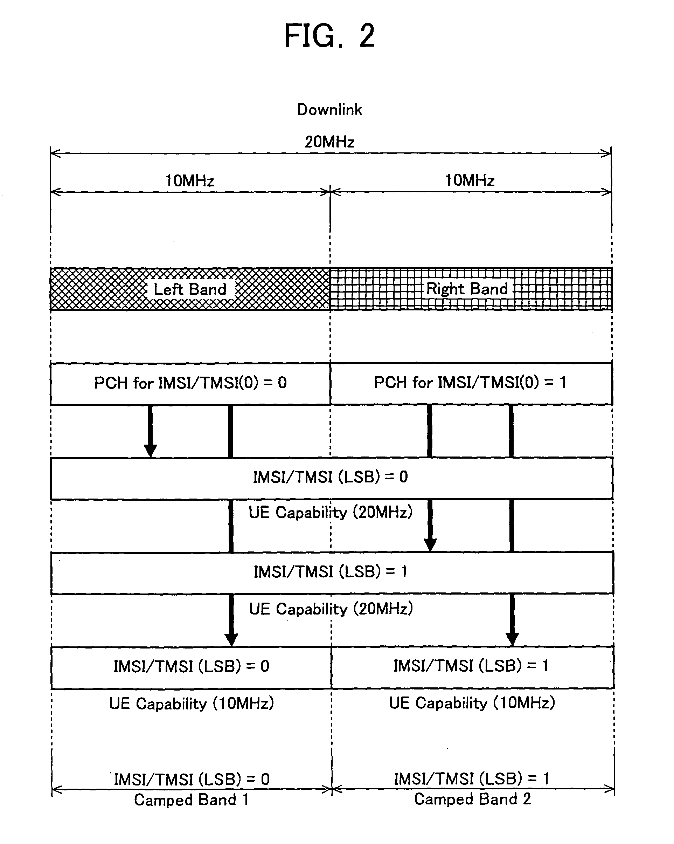

For example, as shown in Fig. 2, it is specified in advance such that lower-order 1 bit of the IMSI or the TMSI is used, and in the case of "0", camped in the Left Band, whereas in the case of "1", camped in the Right Band. The IMSI is a static identifier stored in an SIM card or the like, and the TMSI is an identifier temporarily allocated by the aGW in position update from the mobile station to the aGW.

When the aGW adaptively controls lower-order 1 bit in update of the TMSI, control for the camped frequency layer of the mobile station is performed efficiently. That is, meaning that paging groups are formed by a part of the IMSI or the TMSI or a hash value of the IMSI or the TMSI and camped frequency layers in accordance with the respective paging groups are determined. When the TMSI is used, meaning that the aGW that assigns the TMSI controls the camped frequency layer of the mobile station.

The IMSI is used to determine an information reception frequency layer of the mobile station in the initial position registration. The mobile station receives information exchanged in the initial position registration, that is, information in the downlink of the base station (such as response information for the position registration and response information for a random access) with a frequency layer associated with the IMSI. When the used frequency layer of the uplink and the used frequency layer of the downlink are associated with each other in advance, meaning that the frequency layer that performs initial position registration in the uplink is determined based on the IMSI.

First, in the initial position registration, the mobile station performs a camping operation in the Right Band or the Left Band using a hash value of the IMSI. Subsequently, the mobile station performing the camping operation transmits a message including the IMSI to the aGW for the position registration. When a position registration or a position update request is received from the mobile station, the aGW returns the TMSI showing a new camped frequency layer by including in response information, in view of the load situation in the entire system. When a reply for the position registration or the position update request transmitted from the aGW is received, the mobile station moves to the camped frequency layer shown by the TMSI.

In this case, also with respect to the mobile station having the 20 MHz transmission/reception capability, the paging request is transmitted in either one of bands, thus there is an advantage that processing in the mobile station having the 20 MHz transmission/reception capability is simplified. In the case of the W-CDMA system, an intermittent reception cycle is determined based on subscriber identification information for intermittent reception in a time direction, but also in the present embodiment, adaption to the intermittent reception in the time direction is possible with the similar method. That is, in the present embodiment, meaning that scheduling is performed with a transmission position of time/frequency of paging information associated with subscriber identification information of the mobile station.

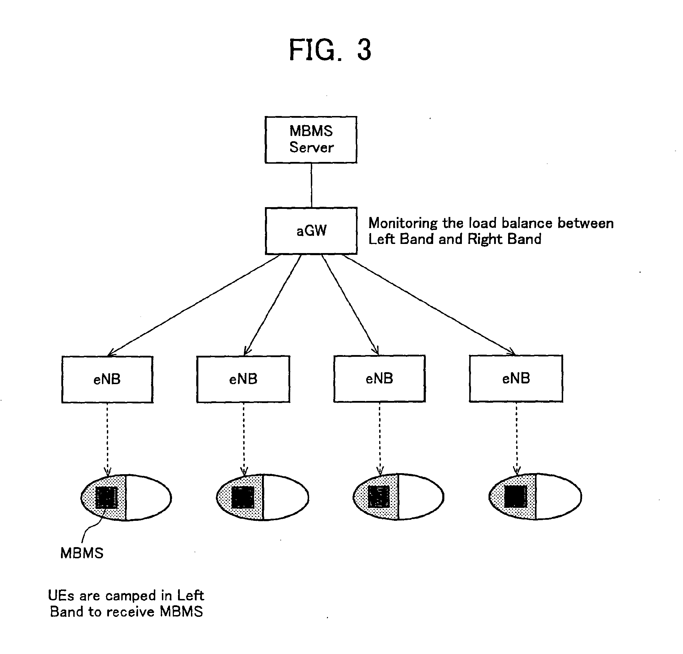

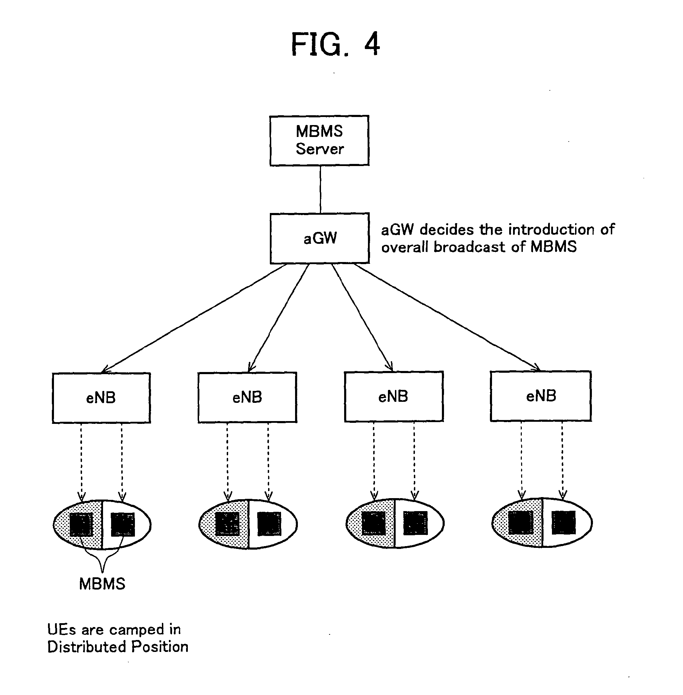

Figs. 3 and 4 show an MBMS control method when control of an MBMS service is applied to a method for managing the camped frequency layer of Fig. 1. As shown in Fig. 3, in view of efficiently using a radio resource for an MBMS service, for example, the MBMS service is transmitted only to the Left Band. In the position registration/update, the mobile station registers not only subscriber identification information of its own station (the IMSI or the TMSI) and the camped frequency layer but also reception request information for the MBMS service with respect to the aGW.

As has been described above, since the camped frequency layer of the mobile station is managed by the aGW, when the mobile station requests change of the camped frequency layer, a permission from the aGW is required. In a case where the mobile station wants to receive the MBMS service, when it is known that the service is not provided in the camped frequency layer, it is necessary to transmit a request to change the camped frequency layer to the aGW. Accordingly, when the mobile station camping in the Right Band includes the reception request information for the MBMS service in the position registration/update request, the aGW is capable of instructing movement to the Left Band. The mobile station acquires information that the MBMS service is provided in the Right Band or the Left Band with broadcast information, an MBMS shared control signal, shared signaling, or exclusive signaling.

On the other hand, when the number of mobile stations that want to receive the MBMS service is extremely increased, it is concerned that traffics of other than the MBMS service are concentrated to the Left Band where the MBMS service is provided and the load is greatly increased. Thus, as shown in Fig. 4, the aGW has a function of performing determination of distribution of the MBMS service to the Right Band. That is, the aGW monitors the traffic load situation in the entire base station under the control of the aGW and determines whether to provide the MBMS service in both Left Band and Right Band, and when 2 Band transmission of the MBMS service is determined, the 2 Band transmission is instructed to the base station. In the 2 Band transmission, there is a case where exactly the same MBMS service is transmitted to both Left Band and Right Band, and a case where only a part of channel of the MBMS service is moved to the Right Band.

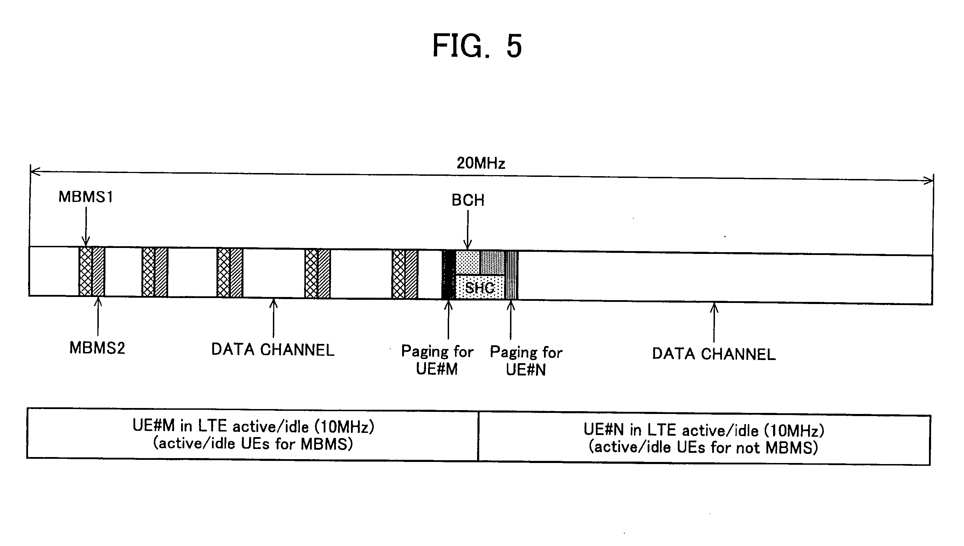

Figs. 5, 6 and 7 conceptually show arrangement of respective physical channels transmitted from the base station of the 20 MHz bandwidth. These figures show only a frequency direction, and the respective physical channels may be arranged in different positions in terms of time. For MBMS physical channels and data physical channels, there are considered the case of being arranged with frequency bands completely divided and the case of being arranged with MBMS channels and data channels time-multiplexed. Even in the case of being time-multiplexed, it is necessary to store the mobile station having the maximum reception bandwidth of 10 MHz, it is required to perform frequency-multiplexing at least in the unit of 10 MHz. Here, the reception frequency layer capability of the mobile station is particularly focused, it is abstracted so that a position in the frequency direction is shown.

Fig. 5 shows arrangement of physical channels when the MBMS service is provided only in the Left Band like in the case of Fig. 3. In a first band search after the power is turned on, a center synchronous channel (SCH) is used, and just after cell search processing is completed, moving to the Right Band or the Left Band. The movement to the Right Band or the Left Band is determined by subscriber identification information of the mobile station and broadcast channel information, and the like.

In response to the position management by the aGW as has been described above, the mobile station that receives the MBMS service and the mobile station that does not receive the MBMS service perform communication or camping processing in the Left band and in the Right Band, respectively. In addition, the mobile station capable of receiving the 20 MHz bandwidth is capable of reception both in the Right Band and the Left Band, thus paging information to the mobile station of the 20 MHz bandwidth is transmitted to the Right Band so that load distribution of information can be performed. To which band the paging information is transmitted is determined by the aGW.

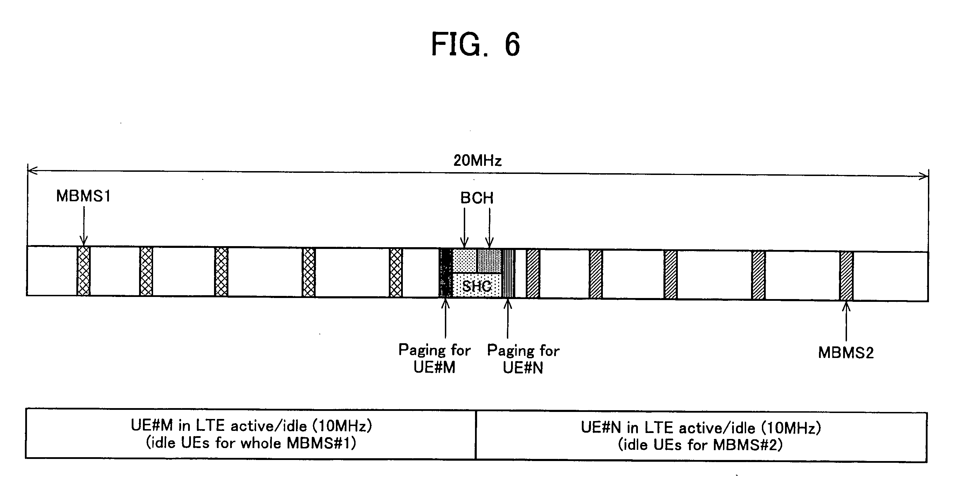

Fig. 6 is a view when a plurality of service types of the MBMS service are arranged in a state of being divided into the Right Band and the Left Band. An MBMS 1 is arranged in the Left Band and an MBMS 2 is arranged in the Right Band. The mobile station requests a desired MBMS service type to the aGW, and performs communication or camping processing in the Left Band or the Right Band under the control of the aGW.

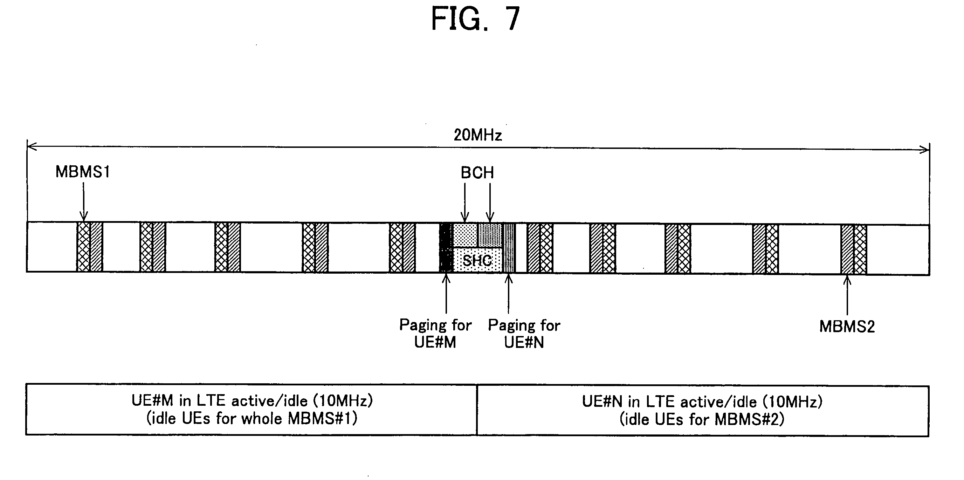

Fig. 7 is a view when exactly the same MBMS service is subjected to 2 Band transmission. Since the mobile station is capable of receiving the MBMS in both Bands, the aGW and the base station control communication of the mobile station or a camped processing frequency layer, considering the load situation in a network.

When the aGW changes the arrangement of the physical channels shown in Figs. 5, 6 and 7 adaptively considering the load situation in a network, optimum load distribution is possible. When the number of mobile stations that desire reception of the MBMS service is less, the arrangement of Fig. 5 is used, as the number of the terminals desiring reception of the MBMS service increases, the arrangement of Fig. 6 is used, and when the number of the terminals desiring reception of the MBMS service is maximum, the arrangement configuration is changed to the arrangement configuration of Fig. 7, so that effective control is possible.

A method is also possible, that the aGW does not perform management with respect to the mobile station having the 20 MHz reception capability, and the mobile station always receives both Left Band and Right Band. In this case, the aGW or the base station is capable of transmitting information to the 20 MHz idle mode mobile station with the band having less traffics, in view of the congestion state of the Left Band and the Right Band. As to specification of a transmission frequency layer, the specification may be performed from the aGW to the base station or the base station may perform determination uniquely. When the specification is performed from the aGW to the base station, it is possible to determine the load on the base station under the control of the aGW totally. However, in the 20 MHz idle mode mobile station, there is a case where it is more efficient that the base station performs determination uniquely in view of the traffic volume in other mobile stations in communication under the respective base stations.

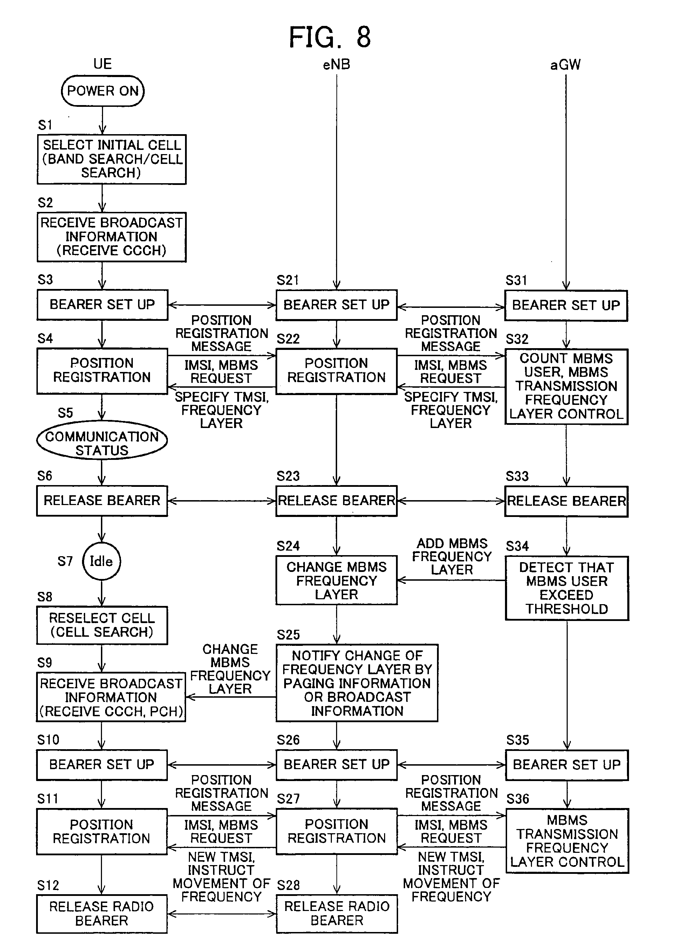

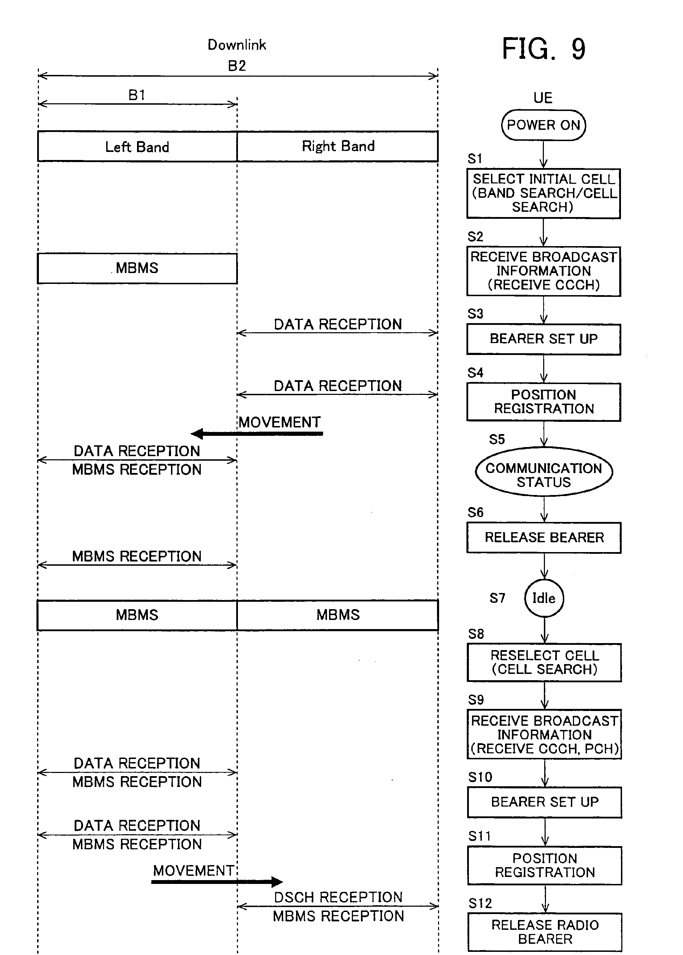

Fig. 8 is a view showing an example of an MBMS control method of the base station, the aGW, and the idle mode mobile station, and Fig. 9 is a view showing a mapping state of the downlink in accordance with the flow of Fig. 8. Fig. 9 describes the flow of the mobile station (UE) of Fig. 8 in order to associate with Fig. 8.
The mobile station when the power is turned on (DETACHED mode) performs initial cell selection (band search, cell search) (S1), and thereafter receives broadcast information (CCCH) (S2), and then performs a bearer set up for position registration processing to the aGW. After the bearer set up is completed (S3, S21, S31), the mobile station transmits a position registration message with an IMSI and request information for the MBMS included therein to the aGW (S4). After the bearer set up is completed, the mobile station is in the active mode.

The aGW manages MBMS request information received from the respective mobile stations and utilizes as a selection index for control of the transmission frequency layer of the MBMS. The MBMS request information is information serving as an index for control of the transmission frequency layer of the MBMS in the aGW, showing that the mobile station wants to receive which channel or which channel group of the MBMS, whether to desire reception of the MBMS service, or whether or not having the capability of receiving the MBMS service. The aGW that has received the position registration message transmits a position registration completion message with the TMSI and camped frequency layer specification information included therein to the mobile station (S32).

As has been described in Fig. 2, the camped frequency layer specification information may be transmitted included in the TMSI implicitly. Here, reception of data and reception of the MBMS are performed in the specified camped frequency layer. In Figs. 8 and 9, the position registration message transmitted from the mobile station that performs data transmission/reception in the Right Band includes request information that the MBMS service is desirably received, which shows that the aGW has instructed frequency layer movement to the Left Band where the MBMS is provided.

When the communication state of the mobile station (S5) is completed and release of the bearer is performed (S6, S23, S33), the mobile station transits to the idle mode (S7) and is to perform reception of the MBMS and the camping operation.
The aGW monitors whether or not the mobile station is concentrated to the Left Band based on the request information for the MBMS received from each mobile station and camped frequency layer of each mobile station, and when the number of users receiving the MBMS exceeds a threshold that is previously determined by a policy of an operator or the like, 2 Band transmission of the MBMS is determined. In addition, when the number of users receiving the MBMS is less than the threshold, the 2 Band transmission is released. When change of the transmission frequency layer of the MBMS is determined, the aGW instructs change of the transmission frequency layer of the MBMS to the base station in a provision range of the MBMS (S34).

The base station that has received the instruction changes the transmission frequency layer of the MBMS (S24) and notifies the respective mobile stations of change information of the MBMS transmission frequency layer by paging information, broadcast information, an MBMS shared control signal, shared signaling, or exclusive signaling (S25). When exactly the same MBMS service is transmitted to both Left Band and Right band, it is not necessary that the mobile station particularly changes the camped frequency layer. When only a part of channel of the MBMS service is transmitted in the Right Band, the mobile station that wants to receive the MBMS channel of the Right Band needs to change the camped frequency layer.
Change information of the transmission frequency layer of the MBMS includes information to identify four kinds of No MBMS Service, Left Band Only, Channel Split (Left Band: MBMS 1, Right Band: MBMS 2), and Duplicate, and setting information of transmission methods thereof.

The mobile station in the idle mode performs cell reselection, and reception of broadcast information/paging information regularly (S8, S9).
When the mobile station receives the change information of the transmission frequency layer of the MBMS by paging information, broadcast information, an MBMS shared control signal, shared signaling, or exclusive signaling, the mobile station in which the channel that has performed reception can not receive the camped frequency layer performs the bearer set up (S10) and position re-registration processing (S11). In position re-registration, the MBMS request information is included and transmitted. The aGW that has received the MBMS request information transmits to the mobile station a position registration completion message with the TMSI and camped frequency layer specification information included therein (S36). In the camped frequency layer specified here, reception of data and reception of the MBMS are performed.

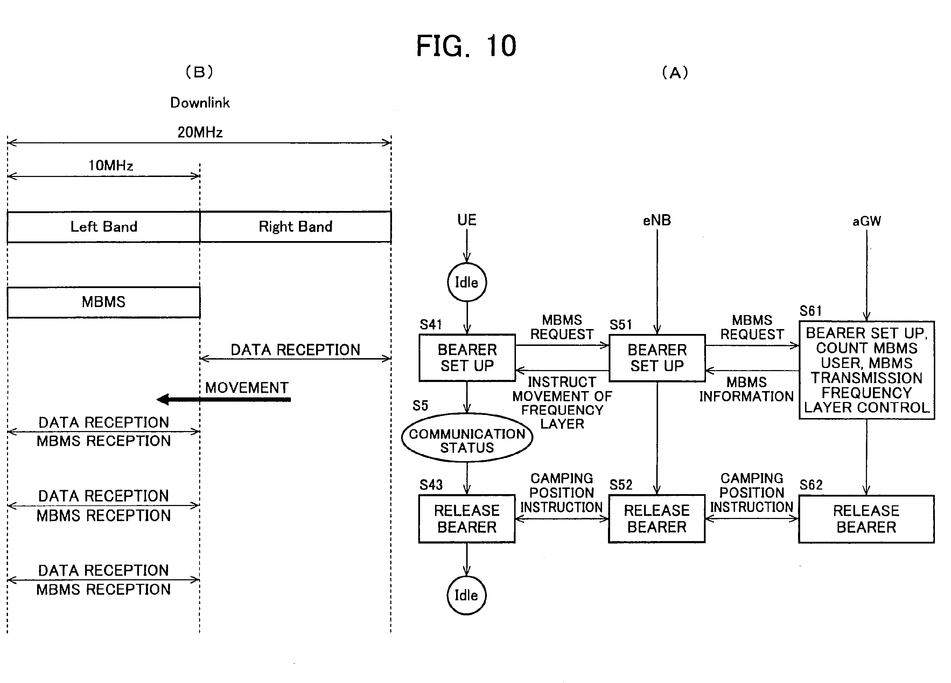

Next, Fig. 10 shows an example where a bearer set up and control for the transmission frequency layer of the MBMS are performed simultaneously. Fig. 10 (A) is a view showing an MBMS control method of the base station, the aGW, and the idle mode mobile station, and Fig. 10 (B) is a view showing a mapping state of the downlink in accordance with the flow of Fig. 10 (A). Here, the case where the MBMS service is provided only in the Left Band is shown. The mobile station transmits a bearer set up message with MBMS request information included therein to the base station and the aGW.

Then, a radio bearer is established between the mobile station and the base station, a radio access bearer is established between the base station and the aGW, and a service bearer is established between the mobile station and the aGW (S41, S51, S61). Here, when the used frequency layer of the mobile mode in the active mode is determined, it is necessary to consider determination of scheduling in both the base station and the aGW. When the used frequency layer of the mobile station in the active mode is determined giving priority to determination of the base station, it is difficult that the aGW always grasps the used frequency layer of the mobile station. It is also possible that the base station instructs the mobile station in the active mode to move to the Right Band and the MBMS service is transmitted as exclusive traffic with respect to the mobile station.

The aGW that has received MBMS request information included in the bearer set up message instructs change of the used frequency layer to the mobile station and the base station in a response message therefor. When a decision right for the used frequency layer is transferred to the base station, the aGW grasps that the used frequency layer is not grasped and transmits transferring the decision right in a state of being included in the bearer set up response message to the base station. Next, when the mobile station terminates communication and transits to the idle mode, the mobile station transmits a bearer release request message with the MBMS request information included therein to the aGW.

When the aGW gives the mobile station a permission to receive the MBMS service, the aGW instructs to camp in the Left Band in the bearer release response message. This makes it possible to grasp the camped frequency layer of the mobile station in the idle mode by the aGW (S43, S52, S62). The aGW monitors whether or not the mobile station is concentrated to the Left Bend based on the MBMS request information included in the bearer set up message or the bearer release request message and the camped frequency layer of each mobile station, and when the number of users receiving the MBMS exceeds/ falls below a threshold that is previously determined by a policy of an operator or the like, change of the transmission frequency layer of the MBMS is determined.

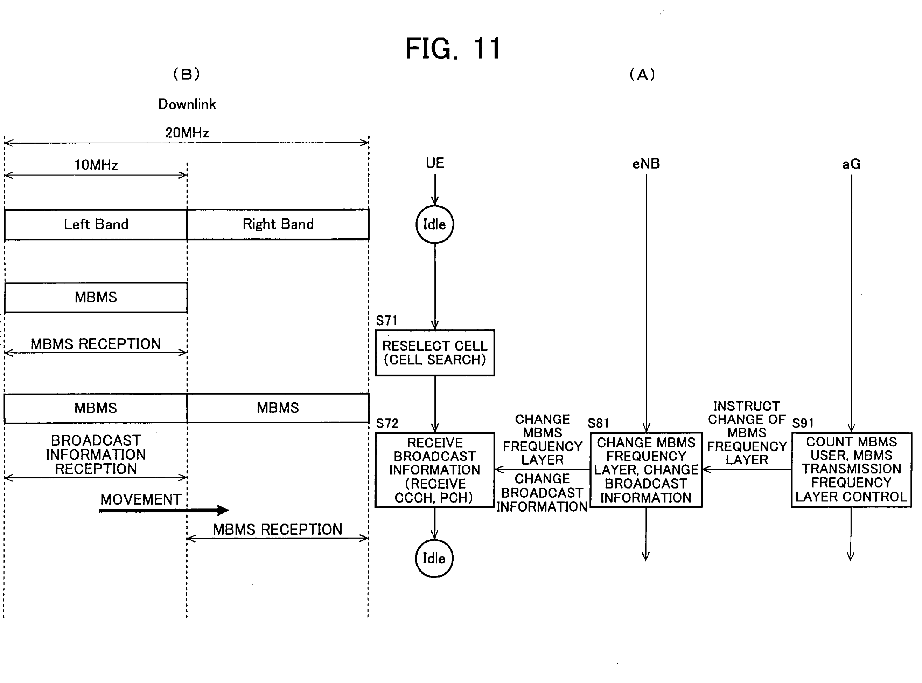

Although description has been given for the method for performing position re-registration when the mobile station changes the camped frequency layer in Figs. 8 and 9, description will be given for a method for reducing the signal load between the aGW and the mobile station in Fig. 11. Fig. 11 (A) is a view showing an MBMS control method of the base station, the aGW, the idle mode mobile station, and Fig. 11 (B) is a view showing a mapping state of the downlink in accordance with the flow of Fig. 11 (A).

When change of the transmission frequency layer of the MBMS is determined, the aGW instructs change of the transmission frequency layer of the MBMS to the base station in a provision range of the MBMS (S91). The base station that has received the instruction notifies the respective mobile stations of change information of the transmission frequency layer of the MBMS by paging information, broadcast information, an MBMS shared control signal, shared signaling, or exclusive signaling (S81). By receiving the change information of the MBMS transmission frequency layer, the respective mobile stations perform change of the camped frequency layer (S72).

When exactly the same MBMS service is transmitted to both Left Band and Right Band, it is not necessary that the mobile station particularly changes the camped frequency layer. When only a part of channel of the MBMS service is transmitted in the Right Band, the mobile station that wants to receive the MBMS service in the Right Band needs to change the camped frequency layer. Thus, it is necessary to perform change of the camped frequency layer in accordance with each of the MBMS transmission frequency layers of the MBMS.

Description will be given for a procedure where the camped frequency layer is changed in accordance with the relationship between paging groups and transmission frequency layers of the MBMS. As paging groups (Paging Groups) of the respective mobile stations, a paging group 1 (Left Band) is represented as "0" and a paging group 2 (Right Bend) is represented as "1". As has been described above, a part of the IMSI or the TMSI may be used as the Paging Group. Moreover, as MBMS groups (MBMS Groups) of the 10 MHz reception capability mobile station, the case where an MBMS channel group 1 is desirably received is represented as "10", the case where an MBMS channel group 2 is desirably received is represented as "01", the case where both receptions are desired is represented as "11", and the case where both receptions are not desired (including the mobile station that does not have the MBMS reception capability) is represented as "00". It is assumed that the Paging Groups and the MBMS Groups are grasped by both the mobile station and the aGW with the method described in Figs 8, 9 and 10. That is, meaning that the position registration and the response information for the bearer set up that have been described in Figs. 8, 9, and 10 include information specifying the Paging Groups and the MBMS Groups.

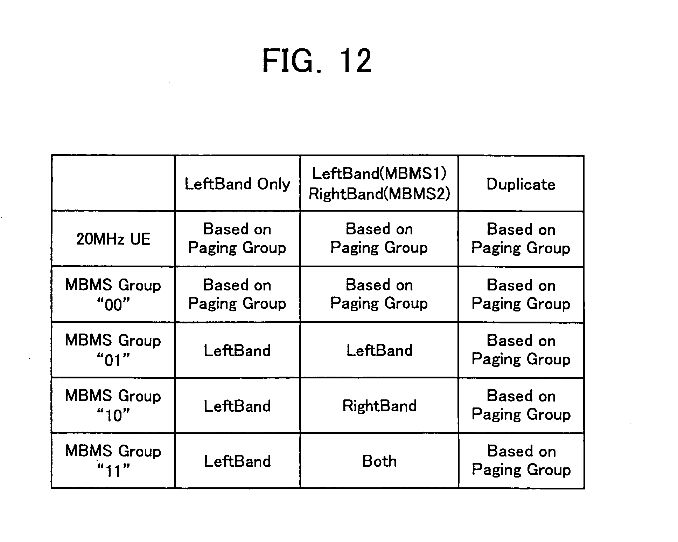

Here, Fig. 12 shows a method for specifying a camped frequency layer in accordance with relationship between a transmission method of the MBMS, paging groups, a reception capability frequency layer and MBMS Groups. There are four kinds of the method for transmitting the MBMS, including No MBMS Service (No MBMS), Left Band Only, Channel Split (Left Band: MBMS 1, Right Band: MBMS 2), and Duplicate. On the other hand, elements for determining the camped frequency layer include the reception capability frequency layer of the mobile station, MBMS Groups "00", "01", "10", and "11". In the case of No MBMS, the camped frequency layer is determined by the Paging Group. The mobile station having the 20 MHz reception capability is capable of receiving both frequency layers as has been described above, thus control is not required here.

The mobile station in the MBMS Group "00" is not dependent on the method for transmitting the MBMS, thus the camped frequency layer is determined by the Paging Group. When the Paging Group is determined by the aGW depending on the number of mobile stations in other than the MBMS group "00", the effective load distribution is possible.
In the mobile station in the MBMS Group "01", the Left Band is the camped frequency layer in the case of Left Band Only and Channel Split transmission. In the case of Duplicate transmission, the camped frequency layer is determined by the Paging Group.

In the mobile station in the MBMS Group "10", the Left Band is the camped frequency layer in the case of Left Band Only and the Right Band is the camped frequency layer in the case of Channel Split transmission. In the case of Duplicate transmission, the camped frequency layer is determined by the Paging Group.

In the mobile station in the MBMS Group "11", the Left Band is the camped frequency layer in the case of Left Band Only. In the case of Duplicate transmission, the camped frequency layer is determined by the Paging Group. In the case of Channel Split transmission, since it is impossible that the aGW grasps in which frequency layer the mobile station camps, paging information is transmitted to both Bands.

When using such a method, the aGW has the decision right for the camped frequency layer, but by transmitting the MBMS request information from the mobile station side, it is possible to request change of the camped frequency layer. When it is determined that it is possible to continue reception of the MBMS in the mobile station side without changing the camped frequency layer, it is not necessary that the MBMS request information is transmitted to the aGW. For example, the mobile station may perform switching of the frequency uniquely, using the intermittent reception interval depending on the relationship between the reception period of MBMS information and the reception period of paging information. However, the aGW transmits the paging information to the set camped frequency layer.

As another example, in the case of Channel Split transmission, the mobile station does not transmit the MBMS request information to request paging information to both Bands, but does not transmit the MBMS request information in the situation where switching of the channel frequency of the MBMS is frequently performed and transmits the MBMS request information (MBMS Group "01" or MBMS Group "10") to the aGW only when a camped position is necessarily changed after channel selection by a user is concluded. The important thing here is that both the mobile station and the aGW grasp that which information is transmitted by which frequency layer.

Here, although the Paging Group has been represented by 1 bit, it is also possible to configure so that the Paging Group is composed by 2 bit or more and the respective groups are adaptively changed to the Left Band and the Right Band using broadcast information. In the case of 2 bit, since there are four groups, information that groups 1 to 3 use the Left Band as the camped frequency layer and the group 4 uses the Right Band as the camped frequency layer is notified to the respective mobile stations with broadcast information. The aGW determines the Paging Group and the camped frequency layer of the Paging Group, in view of the load distribution in a network, request information for the MBMS, the number of the mobile stations in the active mode and in the idle mode, and the like.

There are three methods for separating the MBMS service in the Channel Split. As the first method, decision is made simply depending on contents of the providing service. As the second method, the aGW calculates MBMS request information and makes decision so that load is dispersed uniformly. As the third method, decision is made depending on the reception status such as an MBMS service for a mobile station with a good reception status for the MBMS service 1 and a normal MBMS service for a mobile station with a bad reception status for the MBMS service 2. It is difficult that the reception status of the mobile station in the idle mode is grasped by the base station, and therefore received by the MBMS service 2. In this case, all of the mobile stations in the idle mode are assigned to the MBMS Group "10". The mobile station in the active mode performs information exchange about the reception status with the base station. Depending on the reception status, the base station instructs change of the used frequency layer to the mobile station in the active mode.
Description has been given for the case where there are candidates of two adjacent frequency layers in the same base station in the above description, but it is possible to realize easily even with not-adjacent frequency layers or two or more frequency layers.

The program operated in the position managing device, the mobile station device and the base station device according to the present invention is a program (program for causing a computer to function) that controls a CPU and the like so that base station control of the used frequency layer with respect to the mobile station according to the present invention can be executed. In addition, information handled by these devices is accumulated in a RAM temporarily at the time of processing, and thereafter stored in various kinds of ROMs and HDDs, and is read and corrected/written by the CPU as necessary.

As a recording medium for storing the program, any of a semiconductor medium (for example, a ROM, a nonvolatile memory card, or the like), an optical recording medium (for example, a DVD, an MO, an MD, a CD, a BD, or the like), a magnetic recording medium (for example, a magnetic tape, a flexible disc, or the like) is applicable.

Moreover, there is a case where, by executing the loaded program, not only the function of the above-described embodiments is realized, but also by performing processing in cooperation with an operating system, other application programs, and the like, based on the instruction of the program, the function of the present invention is realized.

Further, when distributing on the market, it is possible that the program is distributed in a state of being stored in a transportable recording medium, or transferred to a server computer connected through a network such as an internet. In this case, a storage device of the server computer is also included in the recording medium of the present invention.

## Claims

1. A position managing device applied to a multimedia broadcast/multicast service (MBMS) mobile communication system that stores a mobile station device having different frequency layer reception capability, determining a frequency layer that provides an MBMS.

2. The position managing device as defined in claim 1, wherein the frequency layer that provides the MBMS is determined depending on at least MBMS request information serving as an index of control for an MBMS transmission frequency layer, acquired from the mobile station device.

3. The position managing device as defined in claim 2, wherein based on the MBMS request information, when the number of MBMS reception mobile station devices exceeds a certain threshold, the number of the MBMS transmission frequency layer is increased, and when being lower than the threshold, the number of the MBMS transmission frequency layer is reduced.

4. A position managing device applied to a multimedia broadcast/multicast service (MBMS) mobile communication system that stores a mobile station device having different frequency layer reception capability, determining a frequency layer that transmits information to an idle mode mobile station device.

5. The position managing device as defined in claim 4, wherein the frequency layer that transmits information to the idle mode mobile station device is determined depending on at least a frequency layer that provides the MBMS.

6. The position managing device as defined in claim 5, wherein the frequency layer that transmits information to the idle mode mobile station device is determined depending on at least a paging group and MBMS request information serving as an index of control for an MBMS transmission frequency layer, acquired from the mobile station device.

7. The position managing device as defined in claim 5, wherein the frequency layer that transmits information to the idle mode mobile station device that has frequency layer reception capability capable of receiving more frequency layers than one MBMS transmission frequency layer simultaneously is determined at least in association with the paging group.

8. The position managing device as defined in claim 5, wherein the frequency layer that transmits information to the idle mode mobile station device that has frequency layer reception capability capable of receiving more frequency layers than one MBMS transmission frequency layer simultaneously is determined as a different frequency layer from the MBMS transmission frequency layer.

9. The position managing device as defined in claim 5, wherein the frequency layer that transmits information to the idle mode mobile station device that has frequency layer reception capability capable of receiving more frequency layers than one MBMS transmission frequency layer simultaneously is determined depending on a ratio of a mobile station device group desiring the MBMS and a mobile station device group not desiring the MBMS in a mobile station group having different frequency layer reception capability.

10. The position managing device as defined in claim 6 or 7, wherein the paging group is determined based on identification information of the mobile station device.

11. The position managing device as defined in claim 6 or 7, wherein the paging group is determined by the position managing device.

12. The position managing device as defined in claim 2, 6 or 9, wherein a position registration request that is transmitted by the mobile station device in position registration or a bearer set up request that is transmitted by the mobile station device for communication connection establishment is caused to include MBMS request information serving as an index of control for an MBMS transmission frequency layer.

13. The position managing device as defined in claim 1, wherein a base station device is instructed to transmit broadcast information or paging information with change information of the frequency layer that provides the MBMS included.

14. The mobile station device applied to a multimedia broadcast/multicast service (MBMS) mobile communication system that stores a mobile station device having different frequency layer reception capability, receiving an MBMS by a frequency layer that provides the MBMS determined by a position managing device.

15. The mobile station device as defined in claim 14, wherein MBMS request information serving an index of control for an MBMS transmission frequency layer is transmitted to a position managing device.

16. The mobile station device applied to a multimedia broadcast/multicast service (MBMS) mobile communication system that stores a mobile station device having different frequency layer reception capability, receiving information to an idle mode mobile station device by a frequency layer depending on a paging group or a frequency layer determined by a position managing device.

17. The mobile station device as defined in claim 16, wherein the information to the idle mode mobile station device is received by a frequency layer determined depending on at least a frequency layer that provides the MBMS.

18. The mobile station device as defined in claim 17, wherein the information to the idle mode mobile station device is received by a frequency layer determined depending on at least a paging group and MBMS request information serving as an index of control for an MBMS transmission frequency layer, acquired from the mobile station device.

19. The mobile station device as defined in claim 17, wherein a mobile station device that has frequency layer reception capability capable of receiving more frequency layers than one MBMS transmission frequency layer simultaneously receives the information to the idle mode mobile station device by a frequency layer determined depending on at least the paging group.

20. The mobile station device as defined in claim 17, wherein the mobile station device that has frequency layer reception capability capable of receiving more frequency layers than one MBMS transmission frequency layer simultaneously receives the information to the idle mode mobile station device by a different frequency layer from the MBMS transmission frequency layer.

21. The mobile station device as defined in claim 17, wherein the paging group is determined based on identification information of the mobile station device.

22. The mobile station device as defined in claim 17, wherein the paging group is determined by the position managing device.

23. The mobile station device as defined in claim 15 or 18, wherein a position registration request that is transmitted in position registration or a bearer set up request that is transmitted for communication connection establishment is transmitted with the MBMS request information included.

24. The mobile station device as defined in claim 17, wherein a frequency layer in the idle mode is changed depending on broadcast information or paging information transmitted from the base station.

25. The mobile station device as defined in claim 17, wherein the frequency layer in the idle mode is changed depending on a position registration response in position registration or a bearer release response.

26. A base station device applied to a multimedia broadcast/multicast service (MBMS) mobile communication system that stores a mobile station device having different frequency layer reception capability, transmitting the MBMS by a frequency layer that provides an MBMS determined by a position managing device.

27. The base station device as defined in claim 26, wherein the frequency layer that provides the MBMS is determined depending on at least MBMS request information serving as an index of control for an MBMS transmission frequency layer transmitted by the mobile station device.

28. A base station device applied to a multimedia broadcast/multicast service (MBMS) mobile communication system that stores a mobile station device having different frequency layer reception capability, transmitting information to an idle mode mobile station device by a frequency layer depending on a paging group or frequency layer determined by a position managing device.

29. The base station device as defined in claim 28, wherein the information to the idle mode mobile station device is transmitted by a frequency layer determined depending on at least the frequency layer that provides the MBMS.

30. The base station device as defined in claim 29, wherein the information to the idle mode mobile station device is transmitted by a frequency layer determined depending on at least a paging group and MBMS request information serving as an index of control for an MBMS transmission frequency layer transmitted by the mobile station device.

31. The base station device as defined in claim 29, wherein information to an idle mode mobile station device that has frequency layer reception capability capable of receiving more frequency layers than one MBMS transmission frequency layer simultaneously is transmitted by a frequency layer determined depending on at least the paging group.

32. The base station device as defined in claim 29, wherein information to the idle mode mobile station device that has frequency layer reception capability capable of receiving more frequency layers than one MBMS transmission frequency layer simultaneously is transmitted by a different frequency layer from the MBMS transmission frequency layer.

33. The base station device as defined in claim 29, wherein the paging group is determined based on identification information of the mobile station device.

34. The base station device as defined in claim 29, wherein the paging group is determined by the position managing device.

35. A base station device applied to a multimedia broadcast/multicast service (MBMS) mobile communication system that stores a mobile station device having different frequency layer reception capability, transmitting information to an idle mode mobile station device that has frequency layer reception capability capable of receiving more frequency layers than one MBMS transmission frequency layer simultaneously by a frequency layer determined by the base station device.

36. The base station device as defined in claim 35, wherein the frequency layer is determined depending on traffic volume of another mobile station device that is currently in communication.

37. A frequency layer control method applied to a multimedia broadcast/multicast service (MBMS) mobile communication system that stores a mobile station device having different frequency layer reception capability, wherein
a position managing device determines a frequency layer that provides an MBMS,
a base station device transmits the MBMS by the frequency layer instructed from the position managing device, and
a mobile station device receives the MBMS by the frequency layer instructed from the position managing device.

38. A frequency layer control method applied to a multimedia broadcast/multicast service (MBMS) mobile communication system that stores a mobile station device having different frequency layer reception capability, wherein
a position managing device determines a frequency layer that transmits information to an idle mode mobile station device,
a base station device transmits information to the idle mode mobile station device by the frequency layer determined by the position managing device, and
a mobile station device receives information to the idle mode mobile station device by the frequency layer determined by the position managing device.

39. A program for causing a computer to realize a function of the position managing device as defined in any one of claims 1 through 13, the mobile station device as defined in any one of claims 14 through 25, or the base station device as defined in any one of claims 26 through 36.

40. A recording medium having the program as defined in claim 39 recorded in a computer so as to be readable.
